# EUROPEAN PATENT SPECIFICATION

(11) **EP 1 462 909 B1**
(45) Date of publication and mention of the grant of the patent: **04.07.2007**
(21) Application number: 04007460.1
(22) Date of filing: 26.03.2004
(51) Int. Cl.: G06F 1/00

(54) **A computer for managing data sharing among application programs**
Computer zur Verwaltung der gemeinsamen nutzung von Daten zwischen Anwendungsprogrammen
Ordinateur pour la gestion du partage des données entre programmes d'application

(30) Priority: 28.03.2003 JP 2003091527
(43) Date of publication of application: 29.09.2004
(73) Proprietor: NTT DoCoMo, Inc., Tokyo 100-6150 (JP)
(72) Inventor: Nishida, Masakazu, Chiyoda-ku Tokyo 100-6150 (JP); Watanabe, Nobuyuki, Chiyoda-ku Tokyo 100-6150 (JP); Tsuda, Masayuki, Chiyoda-ku Tokyo 100-6150 (JP); Hattori, Yasunori, Chiyoda-ku Tokyo 100-6150 (JP); Asai, Mao, Chiyoda-ku Tokyo 100-6150 (JP); Naruse, Naoki, Chiyoda-ku Tokyo 100-6150 (JP); Ichikawa, Yuichi, Chiyoda-ku Tokyo 100-6150 (JP); Tomioka, Atsuki, Chiyoda-ku Tokyo 100-6150 (JP); Takeshita, Masato, Chiyoda-ku Tokyo 100-6150 (JP); Yamada, Kazuhiro, Chiyoda-ku Tokyo 100-6150 (JP); Washio, Satoshi, Chiyoda-ku Tokyo 100-6150 (JP); Kamiya, Dai, Chiyoda-ku Tokyo 100-6150 (JP); Yamane, Naoki, Chiyoda-ku Tokyo 100-6150 (JP); Murakami, Keiichi, Chiyoda-ku Tokyo 100-6150 (JP)
(74) Representative: HOFFMANN EITLE

(56) References cited:
- EP-A1- 1 227 386
- WO-A2-98/21683
- US-A1- 2002 002 703

## Description

### Technical Field

The present invention relates to a method for managing, transferring and sharing of data among programs.

### Background Art

In EP 1, 227, 386 A1 there is described an access control for computers providing a general and flexible mechanism for the secure access control on a computer. Cryptographic checksums are applied for the identification of a program to another program.

In US 2002/0002703 A1 there is described a device method for updating a code, in particular a method for a software provider to enable a software acquiring entity to arrive from an existent first signed piece of code at a second signed piece of code.

In WO 98/21683 there is described a system and method for projecting a computer and a network from hostile and downloads, comprising the steps of receiving a Downloadable, comparing the Downloadable against a security policy to determine whether the security policy has been violated, and discarding the Downloadable when the security policy has been violated.

As is well known, a computer such as a PC executes application programs installed in the computer to perform word processing, Internet browsing, e-mail communication, and the like. It is to be noted that some types of computer data generated by such application programs, can be used by other programs. In other words, data can be shared among a plurality of programs run on a computer. An example of a data sharing technique is disclosed in Japanese Patent Application No. 2002-312215.

A PC or mobile phone capable of carrying out packet communication can download a program from a WWW (World Wide Web) server via the Internet. The Internet is open to the public, and thus anyone can upload a program without restriction. Therefore, a problem arises in that a destructive or harmful program, for example, a "Trojan horse" or "Backdoor" can sneak data or personal information out of a user terminal, or cause a malfunction when accidentally downloaded to a user's computer.

Therefore, if a computer allows, without any restriction, a program to use program-oriented data, which is generated or used during execution of another program, some problems will arise as described below. For example, when executing a program, that may have been provided by a malicious hacker, personal information input by a user is illicitly taken from the user's computer. It is also possible for data used along with an authorized program to be interfered with by other programs that are either destructive or defective.

To overcome the above problems relating to data security with respect to other programs, one option is to prohibit sharing of all data among various programs installed within a computer. In this case, however, usability or functionality of a computer is greatly reduced.

### Disclosure of the Invention

The present invention has been made to overcome the above problems. An object of the present invention is to manage transferring or sharing program-related data among other programs while retaining security of the data.

A computer of the present invention comprises the features of claim 1.

In another aspect, the present invention provides a computer program product having the features of claim 4.

In the present invention the destination program is allowed to use the data that is related to the original program, only if providers of the original and the destination program are the same.

### Brief Description of the Drawings

Fig. 1 shows a configuration of a communication terminal of an embodiment of the present invention.
Fig. 2 shows a configuration of a JavaAP.
Fig. 3 shows a hardware configuration of a mobile phone.
Fig. 4 shows a configuration of a JAR storage.
Fig. 5 shows a configuration of a scratch pad.
Fig. 6 shows an execution environment of a mobile phone.
Fig. 7 shows a processing flow of operations of downloading a JavaAP, which are performed by the mobile phone and a content server.
Fig. 8 shows a processing flow performed by a launch API executed by the mobile phone.
Fig. 9 shows a processing flow of registration of JavaAP performed by a mobile phone in a modified embodiment.

### Detailed Description

A preferred embodiment of the present invention, referring to the accompanying drawings will be described. It is to be noted that like numerals are assigned to like elements in the drawings.

### A. Configuration

### 1. Communication system

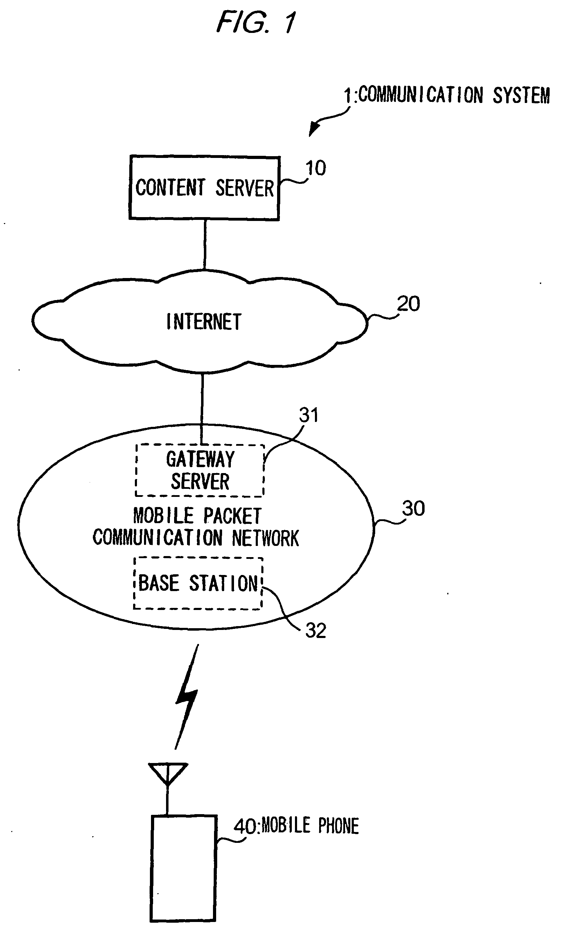

Fig. 1 shows an overall configuration of a communication system 1 of the embodiment. As shown, communication system 1 includes a content server 10, Internet 20, mobile packet communication network 30, and mobile phone 40.

Content server 10 is capable of carrying out communication with mobile phone 40 via mobile packet communication network 30. A Java^{™} application software, (hereinafter referred simply to as "a JavaAP") is stored in content server 10, by which the program can be executed in mobile phone 40.

Mobile packet communication network 30 includes a gateway server 31 and base stations 32. Gateway server 31 performs protocol exchange to relay data between mobile packet 30 and Internet 20. Each of base stations 32 is provided in a commutation service area established in mobile packet communication network 30. Each of base stations 32 in an area (radio cell) carries out communication with mobile phone 40 located in the area.

Mobile phone 40 is a mobile phone accommodated to mobile packet communication network 30. Mobile phone 40 is capable of performing communication with content server 10 via one of base stations 32, to download a JavaAP from content server 10.

### 2. JavaAP

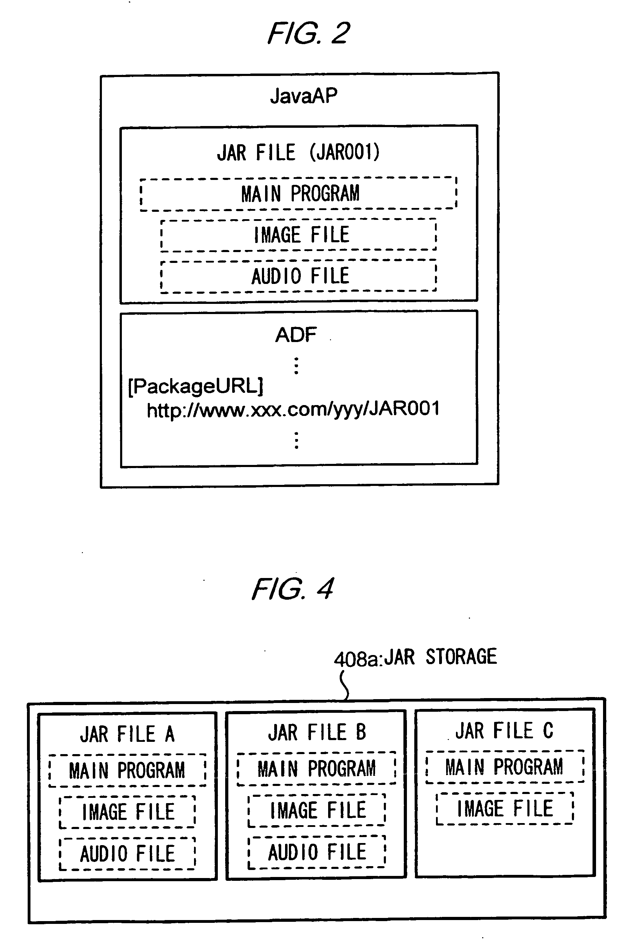

Fig. 2 is a conceptual diagram showing a configuration of a JavaAP stored in content server 10. As shown in the figure, a JavaAP is comprised of a JAR (Java Archive) file and ADF (Application Descriptor File). A JAR file is a bundle of files including a main program (sometimes referred to "a Java application program" or "JavaAPP") and picture data file, audio data file, which are used with the main program. An ADF stores control information for controlling the installation and executing of a JAR file and communicating with an electronic device via a network, and the like.

Specifically, an ADF is a data file that is downloaded to mobile phone 40, prior to downloading a JAR file. Since a JAR file and the corresponding ADF are necessarily downloaded and used in pairs, a URL (Uniform Resource Locator) which indicates a location of JAR file in Internet 20 is included in the ADF as a data item "PackageURL", to thereby associate the ADF with the JAR file. "PackageURL" data of a JavaAP is written by a provider (sender) of JavaAP.

Referring to Fig. 2, "http://www.xxx.com/yyy/JAR001" is included in the "PackageURL". Thus, mobile phone 40 can obtain a JAR file "JAR001" which is associated with the ADF from a WWW server (content server 10) identified by the URL"http://www.xxx.com/yyy/JAR001".

In the following description, a JAR file and an ADF are referred to simply as a JavaAP, except where the JAR file and the ADF need to be distinguished. Also, a JAR file and the corresponding ADF that are comprised of a single JavaAP should be stored in content server 10. However, in another embodiment it is possible that a JAR file and ADF may be stored in different servers.

### 3. Mobile phone

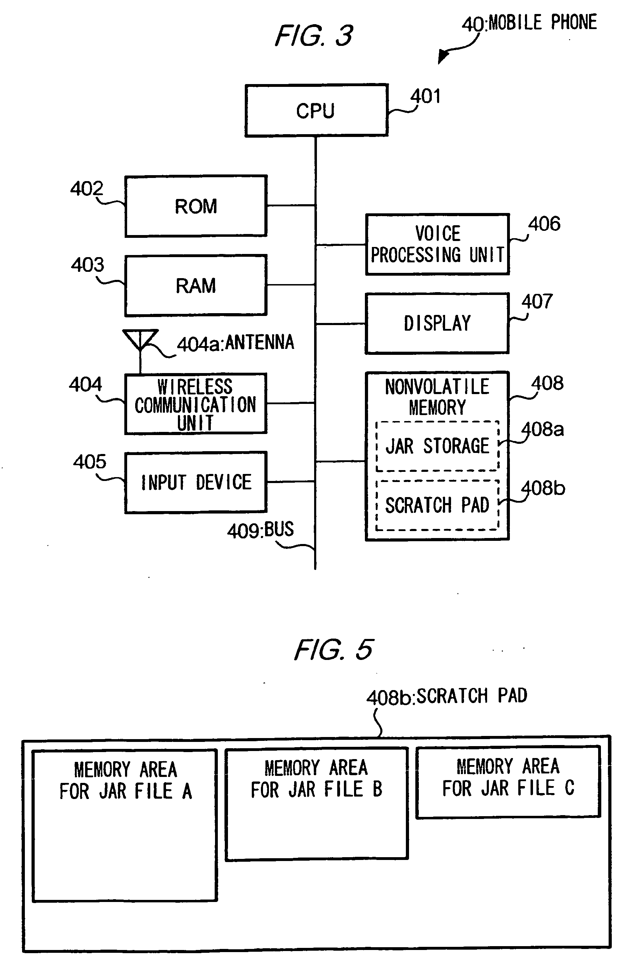

Fig. 3 is a block diagram showing a hardware configuration of mobile phone 40. As shown in Fig. 3, mobile phone 40 includes a CPU 401, ROM 402, RAM 403, wireless communication unit 404, input device 405, voice processing unit 406, liquid crystal display 407, nonvolatile memory 408, and bus 409 that connects every unit of mobile phone 40.

CPU 401 executes a program stored in ROM 402 or nonvolatile memory 408 to control every unit of the mobile phone. ROM 402 stores a program for performing basic control of the above units of the mobile phone. RAM 403 is used by CPU 401 as a work area.

Wireless communication unit 404 includes an antenna 404a for performing wireless communication with base station 32. Specifically, wireless communication unit 404 creates, under control of CPU 401, a signal on the basis of packet communication data or voice communication data by modulating a carrier wave, and transmits the signal to base station 32 using a carrier wave. Wireless communication unit 404 receives a signal from base station 32 via antenna 404, and demodulates the signal to obtain packet communication data or voice communication data.

Input device 405 includes a keypad which enables a user to input a number, character, and some instructions. Input device 405 outputs a signal to CPU 401 according to a user's operation. Voice processing unit 406 includes a microphone, speaker, voice coding/decoding unit, and the like, which performs, under control of CPU 401, a processing related to communication such as call connection and termination controls. Liquid crystal display 407 includes a display panel and a drive circuit for the panel.

Nonvolatile memory 408 is a SRAM (Static-RAM), EEPROM (Electrically Erasable Programmable-ROM), or the like, which stores operating system software (hereinafter referred to simply as "an OS"), WWW browser program, program(s) for setting up a Java execution environment. In addition, nonvolatile memory 408 stores a JavaAP and other programs downloaded from content server 10.

Nonvolatile memory 408 includes a JAR storage 408a and scratch pad 408b. A plurality of JAR files are stored in JAR storage 408a in a manner shown in Fig. 4. Referring to the figure, three JAR files "JAR file A", "JAR file B", and "JAR file C" are stored in JAR storage 408a.

Referring to Fig. 5, memory areas assigned to JAR files are provided, each area storing data which is created by a main program of the JAR file. For example, in a case where a JavaAP is a game application, the data may be game data for future use, which is created when a user leaves the game.

### 4. Execution environment in mobile phone

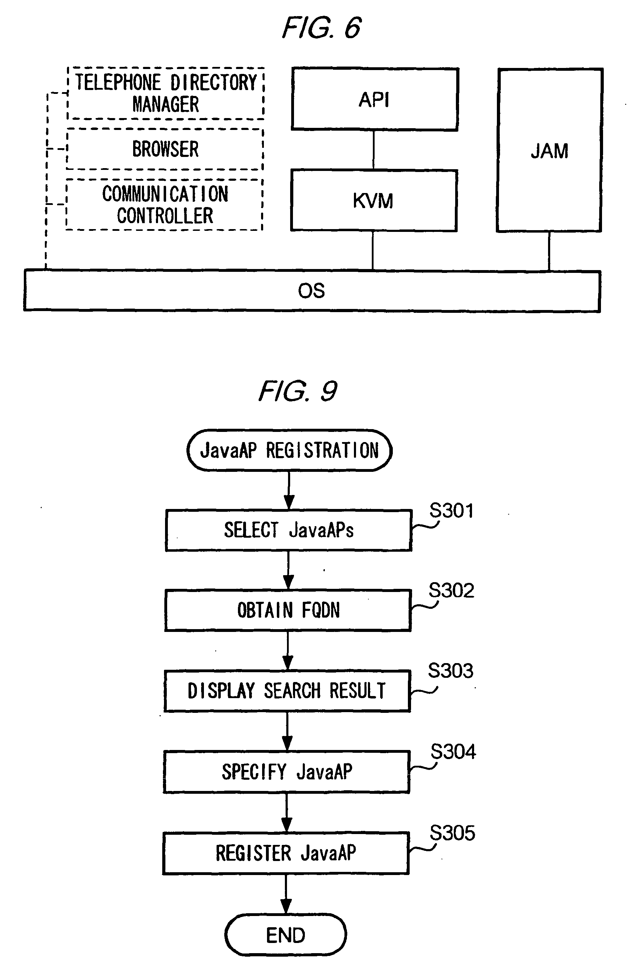

Fig. 6 shows an execution environment set up in mobile phone 40. In the figure, KVM (K Virtual Machine) is a kind of JVM (Java Virtual Machine), which is software for converting Java byte-codes to instruction codes, enabling CPU 401 running the OS to interpret and execute it. An API (Application Program Interface) is a software module for providing to a JavaAP a function defined by CLDC (Connected Limited Device Configuration) and other functions particular to mobile phone 40.

JAM (Java Application Manager) is software for performing under control of the OS, the functions of downloading, installation, execution, and termination of a JavaAP. For example, in a case where the main program of JAR file A shown in Fig. 4 is executed, when a request for accessing resources such as nonvolatile memory 408 and ROM 402 is generated, JAM permits the request only if a requested resource is in any of the following memory areas: an area of JAR storage 408a in which JAR file A is stored; an area of scratch pad 408b assigned to JAR file A; a memory area of RAM 403, which is reserved for executing JAR file A (hereinafter referred to as an AP execution area); and content server 10 from which mobile phone 40 has downloaded Java file A.

Simply put, JAM has a capability of preventing other JavaAPs from using data relating to JavaAPs, by restricting access to resources performed by other JavaAPs when JavaAP is being executed.

It is to be noted that software other than a JavaAP for maintaining a telephone directory, internet browsing, and data communication is executed directly under control of the OS, as shown in Fig. 6.

### B. Operation

### 1. Download of JavaAP

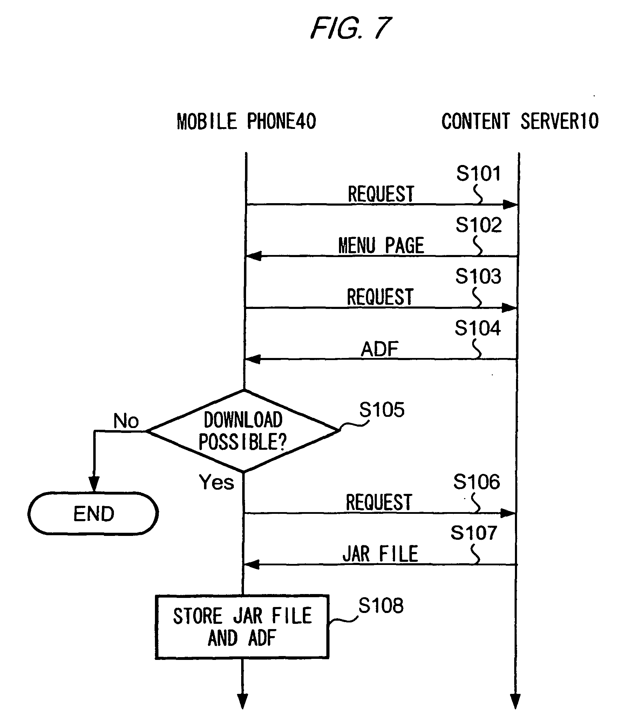

Fig. 7 is a processing flow of downloading a JavaAP performed by mobile phone 40 and content server 10. Processing of step 103 and later performed by mobile phone 40 is performed by JAM.

First, a user of mobile phone 40 executes the WWW browser via input device 405. Next, the user inputs via input device 405 an instruction to access content server 10. Accordingly, a request message for connecting to content server 10 is transmitted from mobile phone 40 to content server 10 (step S101). Upon receipt of the request message, content server 10 performs a predetermined authentication of mobile phone 40 and then transmits data of a menu page of a website run by content server 10 (step 102). Upon receipt of the data, mobile phone 40 displays an image on display 407. Subsequently, information including a selected item displayed on the menu page is exchanged between mobile phone 40 and content server 10.

When a user watching the menu page selects a JavaAP which the user wishes to download, CPU 401 transmits to content server 10 a request message requesting an ADF of the selected JavaAP (step S 103). Upon receipt of the message, content server 10 specifies and reads the ADF from memory, and then transmits the ADF to mobile phone 40 (step S104).

Upon receipt of the ADF, CPU 401 checks contents of the ADF (files included in the ADF), to determine whether a size of JAR file associated with the ADF is small compared to the amount of available storage space of mobile phone 40 (step S105). Specifically, CPU 401 reads "AppSize" data and "SPsize" data from the ADF, and checks the amount of available space of JAR storage 408a and scratch pad 408b.

"AppSize" describes a size of a JAR file to be downloaded, which size is a storage space of the JAR file required for storing the JAR file to JAR storage 408a. "SPsize" describes the extent of available storage space of scratch pad 408b assigned to a JAR file to be downloaded. If available storage space in either JAR storage 408a or scratch pad 408b is not adequate for the selected JavaAP, CPU 401 determines that mobile phone 40 cannot download the JAR file due to shortage of memory space, displays a message on display 407 to notify a user of a failure in downloading, and then stops downloading.

If CPU 401 determines that mobile phone 40 is capable of downloading the JAR file (step S105, YES), CPU 401 identifies content server 10 using "PackageURL" data included in the ADF, which data represents a location of the JAR file, and creates a request message to transmit to content server 10 (step S106). Upon receipt of the message, content server 10 identifies the ADF, reads the JAR file from the memory of the server, and then transmits the JAR file to mobile phone 40 (step S107).

Upon receipt of the JAR file, mobile phone 40 first reads "AppSize" data of the ADF. Next, CPU 401 reserves a memory area in JAR storage 408a, the space specified by the "AppSize" data, and then installs the JAR file in the reserved area. Next, CPU 401 reads "Spsize" data from the ADF and reserves a memory area in scratch pad 408b according to the "SPsize" data used with the JAR file. Next, CPU 401 stores the ADF in nonvolatile memory 408 in association with the JAR file (step S108).

### 2. Execution of JavaAP

When a JavaAP is selected by means of, for example, an instruction of a user watching a list of JavaAPs displayed on display 407, CPU 401 reads a main program of the selected JavaAP from JAR storage 408a and executes it. After the execution, some processing with the JavaAP is performed on the mobile phone. It is possible that a JavaAP is automatically executed when a preset time comes. Further, it is possible that an instruction of the execution is supplied by other running programs. Still further, it is possible that such an instruction may be supplied via e-mail by an electronic device other than mobile phone 40.

When an instruction of executing a JavaAP is input, the AP execution area is reserved for the JavaAP in RAM 403. Specifically, the AP execution area stores a main program read from JAR storage 408a, objects necessary for the execution, and other data created prior to the execution is reserved in RAM 403. After the execution of JavaAP, CPU 401 prohibits, under control of JAM, the currently running JavaAP from accessing data used for other JavaAPs, as described above.

When CPU 401 receives a request for executing another JavaAP stored in nonvolatile memory 408 in a case where processing with the JavaAP is performed on mobile phone 40, CPU 401 executes an API for executing another API (hereinafter referred to as "a launch API"). When the launch API is started, a memory area for the launch API (hereinafter referred to as a launch area is reserved in RAM 403, to which area only the launch API among other APIs is allowed to access.

### 3. Processing with Launch API

Fig. 3 shows a flowchart describing an example of processing performed by CPU 401 with launch API. As shown in the figure, CPU 401 first obtains "PackageURL" data from an ADF of a currently running JavaAP (hereinafter referred to as "an original JavaAP", which is stored in nonvolatile memory 408 (step S201). It is to be noted that the "PackageURL" data represents a location (URL) of the original JavaAP. Next, CPU 401 obtains "PackageURL" data from an ADF of a JavaAP which is selected for execution (hereinafter referred to as "a destination JavaAP") (step S202).

Next, CPU 401 compares two FQDNs (Fully Qualified Domain Names) of the URLs obtained in steps S201 and S 202 (step S203), to determine whether the FQDNs are identical (step S204). Namely, originations (providers) of the original JavaAP and the destination JavaAP are checked. If the FQDNs are not identical, CPU 401 displays a message on display 407 to notify a user of a failure of executing the destination JavaAPs (step S205), and then stops executing destination JavaAP (step S206). In this way, launch API is completed.

If the FQDNs are identical (step S294, YES), CPU 401 determines whether the destination JavaAP is permitted to operate with other JavaAPs (step S207). Specifically, an ADF of a JavaAP includes "LaunchApp" data, which represents whether or not the JavaAP is permitted to operate with other JavaAPs. "LaunchApp" data is set by a provider of the JavaAP. For example, "LaunchApp" data is set to "1" for a JavaAP which is permitted to operate with other JavaAPs (hereinafter referred to as "a cooperative JavaAP"), and "0" is set for a JavaAP which is prohibited to operate with other JavaAPs. It is possible to include in "LaunchApp" additional information such as identification of the cooperative JavaAP(s).

CPU 401 obtains "LaunchApp" data from the ADF stored in nonvolatile memory 408 and determines whether the destination JavaAP is a cooperative JavaAP referring to the "LaunchApp" data ("1" or "0"). If the destination JavaAP is not a cooperative JavaAP (step 207, NO), CPU 401 displays a message to notify the user of a failure of executing the destination JavaAP (step S205), and stops executing the destination JavaAP (step S206).

If the destination JavaAP is a cooperative JavaAP (step 207, YES), CPU 401 determines whether data requested by the destination JavaAP is data used with the original JavaAP (step S208). The data is, for example, parameters and other processing results that are generated during execution of the original JavaAP. It is possible that the data may be image data or audio data which are stored in a JAR file of the original application.

If the destination JavaAP does not request the data in step S208, CPU 401 terminates the original JavaAP. Next, CPU 401 reads a main program of the destination JavaAP from JAR storage 408a and executes it (step S209). In this way the launch API is finished. If the destination JavaAP requests data in step S208, CPU 401 displays an inquiry message on display 407 asking the user whether a transfer of the data to the original JavaAP is permitted.

If the user inputs an instruction to prohibit the transfer, or no instruction is input after a predetermined time has passed since the inquiry message was displayed (step S210, NO), CPU 401 does not transfer the data and displays a message on display 407 notifying a user that the destination JavaAP is stopped (step S205) and then quits the destination JavaAP (step S206), to finish the launch API. It is possible that the inquiry message may be a voice created by CPU 401.

If the user inputs an instruction to permit the transfer of data in the predetermined time period after the inquiry message is displayed (step S210, YES), CPU 401 extracts data from either the AP execution area of RAM 403 or the area of scratch pad 408b assigned to the original JavaAP, and stores the extracted data in the launch area of RAM 403 (step S211). Next, CPU 401 terminates the original JavaAP and deletes data stored in the AP execution area of RAM 403. Finally, CPU 401 reads a main program of the destination JavaAP from JAR storage 408a and executes it (step S212).

After execution of the destination JavaAP, CPU 401 reads the data from the launch area of RAM 403. Next, CPU 401 reads the data in either the AP execution area of RAM 403 reserved for the destination JavaAP or a memory area of scratch pad 408b assigned to the destination JavaAP (step S213), and then finishes the launch API.

From the foregoing, when the destination JavaAP is started, the data used with the original JavaAP is transferred to a memory area (the AP execution area or an area of scratch pad 408 assigned to the destination JavaAP), from which the data can be accessed by destination JavaAP. As a result, the data can be used in processing performed by the destination JavaAP.

An example of JavaAPs will be described below, in which two JavaAPs are provided by a single provider, one being a strategy-oriented baseball simulation game software (hereinafter referred to as "a game JavaAP"), and the other baseball training game software for creating a baseball player and training him to develop his skills (batting, pitching, base running, etc.). The data of the baseball player is available for the game. This software is hereinafter referred to as "a practice JavaAP"). A user of mobile phone 40 downloads the JavaAPs and executes the game JavaAP and the practice JavaAP, to "play" baseball using his baseball player. In this case, FQDNs of the game JavaAP and the practice JavaAP are the same, thus data relating to the baseball players can be transferred from the game JavaAP to the practice JavaAP, or the data can be shared between the above two JavaAPs.

In summary, according to the embodiment, mobile phone 40 enables a destination JavaAP to access program-related data that is used or created with an original JavaAP, only if providers of the original and the destination JavaAPs are the same.

Therefore, even in a case where an unauthorized JavaAP is mistakenly downloaded and executed by mobile phone 40, transfer of data relating to an authorized program to the unauthorized JavaAP is prevented, since the providers of the JavaAPs are checked. Further, in this embodiment, after completion of authentication of the originations (providers) of the JavaAPs (FQDN), a user is requested to give permission of transferring the data. Accordingly, data security and flexibility of data transfer management is further improved.

As described in the embodiment, mobile phone 40 executes programs and APIs stored in ROM 402 and nonvolatile memory 408 to perform processing shown in Figs .7 and 8. It is possible to provide the above programs and APIs to mobile phone 40 via a communication network. Further, it is possible to provide the above programs and APIs via a computer-readable storage medium such as a floppy disk, CD-ROM, and flash memory.

### C. Modifications

### 1. Example 1

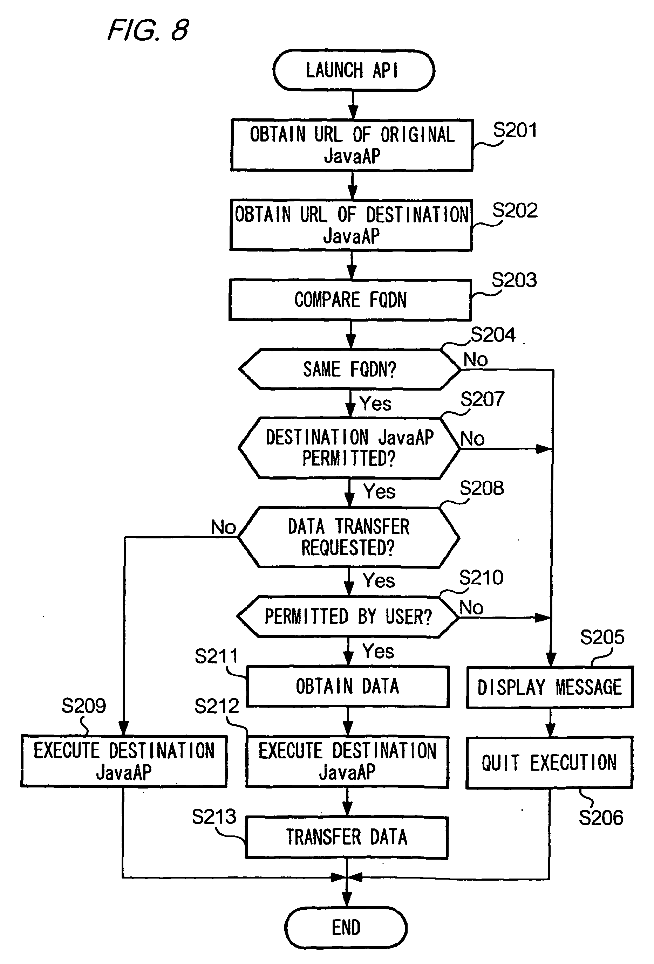

In the processing with the launch API shown in Fig. 8, it is possible to provide an additional step for determining in advance, whether a user gives permission to exchange data between the original and the destination JavaAPs. In this case, before executing JavaAPs, the user is required to register two or more JavaAPs, between which the user wishes that data be shared.

Fig. 9 shows an example of a processing flow of the above registration performed by CPU 401. The registration processing is started when a user inputs an instruction to register two or more JavaAPs that are permitted to share data among each other.

Referring to the figure, when a user selects a JavaAP among other JavaAPs installed in nonvolatile memory 408 (step S301), CPU 401 obtains a FQDN of the selected JavaAP, referring to a "PackageURL" data included in an ADF of the JavaAP (step S302). Next, CPU 401 searches JavaAP(s) with an FQDN that is the same as the FQDN obtained in step S302 in nonvolatile memory 408. If a JavaAP(s) with the same FQDN is found, CPU 401 displays a list of the found JavaAP(s) on display 407 (step S303).

When the user specifies after referring to the list, a JavaAP(s) permitted to share data with the JavaAP selected in step S301 (step S304), CPU 401 stores in nonvolatile memory 408 corresponding, identifications (filename of a JAR file, for example) of the JavaAP specified in step S304 and the JavaAP selected in step S301 as registration information (step S305). Thus, it is possible to register other JavaAP(s) which are permitted to share data of the JavaAP selected in step S301 is prohibited.

In this example, after completion of the registration, in the processing with the launch API shown in Fig. 8, CPU 401 determines whether transferring data among JavaAPs is permitted in terms of (i) providers of the original and the destination JavaAPs and (ii) prior approval by a user. Namely, the above two conditions are required to be fulfilled to transfer data, thus data security in mobile phone 408 is improved.

### 2. Example 2

In the above embodiment, steps S201 through S213 of Fig. 8 are performed by an API (the launch API). However, it is possible to perform those steps by JAM or OS.

## Claims

1. A computer, comprising:
a receiving means (404) for receiving a program;
**characterized by**
a storage means (408) for storing correspondingly an original program and a destination program and related URL provider identifications of the original programs and the destination programs;
an executing means (401, KVM, PIPZ) for executing a program being stored in said storage means (408);
a determining means (401) for determining whether the fully qualified domain names of the URL provider identifications of the original program and the destination program are the same, the determination being carried out in response to a request for executing the destination program; and
the determining means (401) permitting execution of the destination program while sharing data being associated with and used by the original program with the destination program, when said determining means (401) determines that the fully qualified domain names of the URL provider identifications are the same.

2. The computer of claim 1, further comprising:
an input device (405) for use by a user; and
a requesting means (401) for requesting a user's permission to use the data with the destination program; wherein
upon receipt of permission via said input device (405), a permitting means (401) permits the execution of the destination program and the use of data with the destination program, if said determining means (401) determines the provider identifications of the original program and the destination programs are the same.

3. The computer of claim 1, further comprising:
an input device (401) used by a user; and
a setting means for setting, on the basis of the instruction input via said input device (405) the permission to use the data with the destination program; wherein
if the permission is set by said setting means and said determining means (401) determines that the provider identifications are the same, said permitting means permits use of the data with the destination program.

4. A computer program product for causing a computer to execute the steps of:
storing correspondingly an original program and a destination program and related URL provider identifications of the original and destination programs in a memory;
executing a program, the program being stored in said storage means, said storage means storing at least original and destination programs;
determining in response to a request for executing the destination program, whether fully qualified domain names of the URL provider identifications of the original program and the destination program that are stored in said memory are the same; and
permitting execution of the destination program while sharing data being associated with and used by the original program with the destination program when fully qualified domain names of the URL provider identifications are the same.

5. The computer program product of claim 4, further causing a computer to execute the steps of:
executing, when the fully qualified domain names of the URL provider identifications of the original program and the destination program that are stored in said memory are the same, a check using registered information on a relationship between the original program and the destination program; and
permitting execution of the destination program when the check is passed.

6. The computer program product of claim 5, further causing a computer to execute the steps of:
executing a further check on approval by a user; and
permitting execution of the destination program when the further check is passed.

## Patentansprüche

1. Computer, mit:
einer empfangenden Vorrichtung (404) zum Empfangen eines Programms;
**gekennzeichnet durch**
eine Speichervorrichtung (408) zum entsprechenden Speichern eines ursprünglichen Programms und eines Zielprogramms und verwandter URL-Anbieteridentifikationen des ursprünglichen Programms und des Zielprogramms;
einer ausführenden Vorrichtung (401, KVM, PIPZ) zum Ausführen eines Programms, das in der Speichervorrichtung (408) gespeichert ist;
einer bestimmenden Vorrichtung (401) zum Bestimmen, ob die voll-qualifizierten Domänennamen der URL-Anbieteridentifikationen des ursprünglichen Programms und des Zielprogramms die gleichen sind, wobei die Bestimmung in Reaktion auf eine Anfrage zum Ausführen des Zielprogramms ausgeführt wird; und
die bestimmende Vorrichtung (401) die Ausführung des Zielprogramms erlaubt, während Daten mit dem Zielprogramm geteilt werden, die mit dem und von dem ursprünglichen Programm verknüpft sind und verwendet werden, wenn die bestimmende Vorrichtung (401) bestimmt, dass die voll-qualifizierten Domänennamen der URL-Anbieteridentifikationen die gleichen sind.

2. Computer nach Anspruch 1, weiter mit:
einem Eingabegerät (405) zur Verwendung von einem Benutzer; und
einer anfragenden Vorrichtung (401) zum Anfragen einer Benutzererlaubnis, die Daten mit dem Zielprogramm zu verwenden; wobei
auf Empfang einer Erlaubnis über das Eingabegerät (405) hin eine erlaubende Vorrichtung (401) die Ausführung des Zielprogramms und die Verwendung von Daten mit dem Zielprogramm erlaubt, falls die bestimmende Vorrichtung (401) bestimmt, die Anbieteridentifikationen des ursprünglichen Programms und des Zielprogramms sind die gleichen.

3. Computer nach Anspruch 1, weiter mit:
einem Eingabegerät (401), das von einem Benutzer verwendet wird, und
einer setzenden Vorrichtung zum Setzen der Erlaubnis auf der Basis der Befehlseingabe über das Eingabegerät (405), die Daten mit mit dem Zielprogramm zu verwenden; wobei
falls die Erlaubnis von der setzenden Vorrichtung gesetzt ist und die bestimmende Vorrichtung bestimmt, dass die Anbieteridentifikationen die gleichen sind, die erlaubende Vorrichtung die Verwendung der Daten mit dem Zielprogramm erlaubt.

4. Computerprogrammprodukt zum Veranlassen eines Computers, die Schritte auszuführen:
entsprechendes Speichern eines ursprünglichen Programms und eines Zielprogramms und verwandter URL-Anbieteridentifikationen des ursprünglichen Programms und des Zielprogramms in einem Speicher;
Ausführen eines Programms, das in der Speichervorrichtung (408) gespeichert ist, wobei die Speichervorrichtung zumindest ursprüngliche und Zielprogramme speichert;
Bestimmen in Reaktion auf eine Anfrage zum Ausführen des Zielprogramms, ob voll-qualifizierte Domänennamen der URL-Anbieteridentifikationen des ursprünglichen Programms und dem Zielprogramm, die in dem Speicher gespeichert sind, die gleichen sind; und
Erlauben einer Ausführung des Zielprogramms, während Daten mit dem Zielprogramm geteilt werden, die mit dem und von dem ursprünglichen Programm verknüpft sind und verwendet werden, wenn die voll-qualifizierten Domänennamen der URL-Anbieteridentifikationen die gleichen sind.

5. Computerprogrammprodukt nach Anspruch 4, weiter zum Veranlassen eines Computers, die Schritte auszuführen:
Ausführen, wenn die voll-qualifizierten Domänennamen der URL-Anbieteridentifikationen des ursprünglichen ' Programms und des Zielprogramms, die in dem Speicher gespeichert sind, die gleichen sind, einer Prüfung unter Verwendung von registrierter Information über eine Beziehung zwischen dem ursprünglichen Programm und dem Zielprogramm; und
Erlauben einer Ausführung des Zielprogramms, wenn der Überprüfung bestanden ist.

6. Computerprogrammprodukt nach Anspruch 5, weiter zum Veranlassen eines Computers, die Schritte auszuführen:
Ausführen einer weiteren Überprüfung auf Genehmigung von einem Benutzer hin; und
Erlauben einer Ausführung des Zielprogramms, wenn die weitere Prüfung bestanden ist.

## Revendications

1. Ordinateur, comprenant:
un moyen de réception (404) pour recevoir un programme;
**caractérisé par**
un moyen de stockage (408) pour stocker de manière correspondante un programme original et un programme de destination et des identifications de fournisseur URL connexes des programmes originaux et des programmes de destination;
un moyen d'exécution (401, KVM, PIPZ) pour exécuter un programme qui est stocké dans ledit moyen de stockage (408);
un moyen de détermination (401) pour déterminer si les noms de domaine pleinement qualifiés des identifications de fournisseur URL du programme original et du programme de destination sont les mêmes, la détermination étant exécutée en réponse à une demande d'exécution du programme de destination; et
le moyen de détermination (401) permettant une exécution du programme de destination tout en partageant des données qui sont associées avec et utilisées par le programme original avec le programme de destination, lorsque ledit moyen de détermination (401) détermine que les noms de domaine pleinement qualifiés des identifications de fournisseur URL sont les mêmes.

2. Ordinateur de la revendication 1, comprenant de plus:
un dispositif d'entrée (405) à utiliser par un utilisateur; et
un moyen de requête (401) pour requérir une permission de l'utilisateur pour utiliser les données avec le programme de destination; où
sur réception d'une permission par le biais dudit dispositif d'entrée (405), un moyen de permission (401) permet l'exécution du programme de destination et l'utilisation de données avec le programme de destination, si ledit moyen de détermination (401) détermine que les identifications de fournisseur du programme original et des programmes de destination sont les mêmes.

3. Ordinateur de la revendication 1, comprenant de plus:
un dispositif d'entrée (401) utilisé par un utilisateur; et
un moyen d'établissement pour établir, sur la base de l'instruction entrée par le biais dudit dispositif d'entrée (405) la permission d'utiliser les données avec le programme de destination; où
si la permission est établie par ledit moyen d'établissement et que ledit moyen de détermination (401) détermine que les identifications de fournisseur sont les mêmes, ledit moyen de permission permet une utilisation des données avec le programme de destination.

4. Produit de programme informatique pour amener un ordinateur à exécuter les étapes de:
stocker de manière correspondante un programme original et un programme de destination et des identifications de fournisseur URL connexes des programmes original et de destination dans une mémoire;
exécuter un programme, le programme étant stocké dans ledit moyen de stockage, ledit moyen de stockage stockant au moins des programmes original et de destination;
déterminer en réponse à une requête d'exécution du programme de destination, si des noms de domaine pleinement qualifiés des identifications de fournisseur URL du programme original et du programme de destination qui sont stockés dans ladite mémoire sont les mêmes; et
permettre une exécution du programme de destination tout en partageant des données qui sont associées avec et utilisées par le programme original avec le programme de destination lorsque des noms de domaine pleinement qualifiés des identifications de fournisseur URL sont les mêmes.

5. Produit de programme informatique de la revendication 4, amenant de plus un ordinateur à exécuter les étapes de:
exécuter, lorsque les noms de domaine pleinement qualifiés des identifications de fournisseur URL du programme original et du programme de destination qui sont stockés dans ladite mémoire sont les mêmes, une vérification utilisant une information enregistrée sur une relation entre le programme original et le programme de destination; et
permettre une exécution du programme de destination lorsque la vérification est passée.

6. Produit de programme informatique de la revendication 5, amenant de plus un ordinateur à exécuter les étapes de:
exécuter une vérification supplémentaire sur approbation par un utilisateur; et
permettre une exécution du programme de destination lorsque la vérification supplémentaire est passée.
